# EUROPÄISCHE PATENTSCHRIFT

(11) **EP 3 124 162 B1**
(45) Veröffentlichungstag und Bekanntmachung des Hinweises auf die Patenterteilung: **29.04.2020**
(21) Anmeldenummer: 16185338.7
(22) Anmeldetag: 19.11.2009
(51) Int. Cl.: B23K 20/12, B23K 37/06

(54) **VERFAHREN ZUM HERSTELLEN VON ÜBERLAPPUNGSSTOSSSCHWEISSVERBINDUNGEN UND ÜBERLAPPUNGSSTOSSSCHWEISSVERBINDUNG**
METHOD FOR PRODUCING OVERLAPPING WELD JOINTS AND OVERLAPPING WELD JOINT
PROCÉDÉ DE FABRICATION D'UN JOINT DE SOUDURE PAR RECOUVREMENT ET JOINT DE SOUDURE PAR RECOUVREMENT

(30) Priorität: 26.11.2008 DE 102008044087; 26.11.2008 US 11825508 P
(43) Veröffentlichungstag der Anmeldung: 01.02.2017
(62) Teilanmeldung aus: 09759933.6
(73) Patentinhaber: Airbus Operations GmbH, 21129 Hamburg (DE)
(72) Erfinder: PACCHIONE, Marco, 22605 Hamburg (DE); SILVANUS, Jürgen, 82008 Unterhaching (DE)
(74) Vertreter: Isarpatent

(56) Entgegenhaltungen:
- DE-A1- 10 336 668
- JP-A- 11 058 039
- JP-A- 2004 042 049
- US-A1- 2005 139 640
- US-B1- 6 676 008

## Beschreibung

Die vorliegende Erfindung betrifft ein Verfahren zum Herstellen von Überlappungsstoßschweißverbindungen sowie eine derartige Überlappungsstoßschweißverbindung.

Unter Schweißen versteht man (gemäß DIN-Norm DIN EN 14610 und DIN 1910-100) das unlösbare Verbinden von Bauteilen unter Anwendung von Wärme oder Druck - mit oder ohne Schweißzusatzwerkstoffen. Die Verbindung erfolgt je nach Schweißverfahren in einer Schweißnaht oder einem Schweißpunkt, beim Reibverschweißen auch in einer Fläche. Die zum Schweißen notwendige Energie wird von außen zugeführt.

Bei der Herstellung von Überlappungsstoßschweißnähten werden die durch eine Schweißnaht zu verbindenden Bauteile zur Überlappung gebracht, um anschließend miteinander verschweißt zu werden.

Überlappungsstöße lassen sich sowohl durch Kehlnähte randseitig verschweißen als auch mittels verschiedener Verfahren, wie z.B. Punktschweißen oder Rührreibschweißen durch die Lagen von Material hindurch miteinander verschweißen.

Werden Überlappungsstöße durch Punktschweißen, Rührreibschweißen oder andere nicht randseitig Kehlnähte vorsehende Schweißverfahren miteinander verbunden, ergibt sich das Problem, dass Verbindungsspalte zwischen den miteinander verbundenen Bauteilen außerhalb der Schweißstellen gegeben sind. Diese Spalte sind anfällig für eine Korrosion, unter anderem deswegen, weil sich Feuchtigkeit hier einlagern kann. Durch Kapillareffekte gelangt Feuchtigkeit weit in diese Spalte hinein und verbleibt dort. Es ist schwierig, die engen Spalte mit einer Korrosionsschutzbeschichtung vollständig zu füllen. Daher ist bei dieser Form von Überlappungsstoßschweißverbindungen die Haltbarkeit nicht optimal.

Im Stand der Technik gibt es verschiedene Ansätze, die sich zum Ziel gesetzt haben, Lösungen für das genannte Problem zur Verfügung zu stellen. Unter anderem werden zusätzliche Füllmaterialien zwischen, die zu verbindenden Bauteile im Überlappungsbereich eingefügt, um die genannten Nachteile zu beheben. So werden in der Patentanmeldung US 2007/0044406 A1 thermoplastische Dichtmittel zwischen den mittels beispielsweise einer Schweißverbindung zu verbindenden Bauteilen vorgesehen. Diese Füllmaterialien reagieren jedoch teilweise bei den hohen Prozesstemperaturen mit dem Material in der Schweißzone und verändern die Materialeigenschaften während des Schweißprozesses.

Des Weiteren ist aus der JP 11 058039 A1 ein Verfahren zur Reduzierung von Spannungen bei zwei miteinander zu verbindenden Bauteilen bekannt. Dazu werden Verbindungsvorsprünge an den beiden zu verbindenden Bauteilen in deren Überlappungsbereich vorgesehen. Die beiden Bauteile werden anschließend im Bereich der Verbindungsvorsprünge mittels Reibrührschweißens miteinander verschweißt.

Es ist daher Aufgabe der vorliegenden Erfindung, ein Verfahren zur Herstellung von Überlappungsstoßschweißverbindungen und eine Überlappungsstoßschweißverbindung zur Verfügung zu stellen, welche die die genannten Nachteile beseitigt. Das erfindungsgemäße Verfahren zur Herstellung von Überlappungsstoßschweißverbindungen soll es ermöglichen, Überlappungsstoßschweißverbindungen mit hoher Festigkeit und geringer Korrosionsanfälligkeit herzustellen. Ferner ist es eine Aufgabe der vorliegenden Erfindung Überlappungsstoßschweißverbindungen herstellen zu können, welche außerhalb der eigentlichen Schweißnaht keine Spalte aufweisen, in denen sich Feuchtigkeit oder andere Medien absetzen können.

Erfindungsgemäß wird diese Aufgabe durch das Verfahren zum Herstellen von Überlappungsstoßschweißverbindungen mit den Merkmalen des unabhängigen Patentanspruchs 1 und die Überlappungsstoßschweißverbindung mit den Merkmalen des Patentanspruchs 5 gelöst. In den Unteransprüchen finden sich vorteilhafte Ausgestaltungen und Verbesserungen der Erfindung.

Die der vorliegenden Erfindung zugrunde liegende Idee besteht verfahrensseitig darin, dass bei einem Verfahren zum Herstellen von Überlappungsstoßschweißverbindungen zunächst zwei flächige zu verbindende Bauteile, die jeweils mindestens einen Sockel aufweisen, bereitgestellt werden. Im Hinblick auf die Bauteile ist das Verfahren bevorzugt bei Blechteilen einzusetzen. Die Blechteile bestehen besonders bevorzugt aus Stahl, bevorzugt aus Titan, Aluminium oder anderen schweißbaren Werkstoffen wie z.B. Thermoplastkunststoffen.

In einem nachfolgenden Verfahrensschritt werden die Bauteile so angeordnet, dass die Sockel einander zugewandt sind und sich die Bauteile in einem Überlappungsbereich überlappen, der sich wenigstens teilweise über beide Sockel erstreckt. Die Sockel kann man sich als im wesentlichen ebene plateauförmige Erhebungen vorstellen, die von dem flächigen Basismaterial ausgehen. Werden die beiden Bauteile mit den Sockeln einander zugewandt aufeinander angeordnet, ist der restliche flächige Bereich der Bauteile demzufolge in der Regel voneinander beabstandet. Die Sockel gehen bevorzugt mit einem Radius in das flächige Basismaterial über.

Gemäß einer bevorzugten Weiterbildung der vorliegenden Erfindung werden beim Verschweißen der beiden Bauteile mindestens zwei im wesentlichen parallel verlaufende Schweißnähte gebildet. Durch das Vorsehen von mehreren Schweißnähten, die nebeneinander verlaufen, kann eine erhöhte Festigkeit bei der Verbindung beider Bauteile erzielt werden. Bevorzugt sind die einzelnen Schweißnähte ohne Zwischenraum nebeneinander angeordnet. Besonders bevorzugt überlappen sich dabei die einzelnen Schweißnähte. Dadurch wird vermieden, dass Feuchtigkeit zwischen die einzelnen nebeneinander angeordneten Schweißnähte eindringt und dort Korrosion verursachen kann.

Weiter bevorzugt wird beim erfindungsgemäßen Verfahren zum Herstellen von Überlappungsstoßschweißverbindungen als Schweißverfahren ein Rührreibschweißen angewendet, bei dem ein rotierendes Schweißwerkzeug an wenigstens eines der Bauteile zum Erzeugen von Reibungswärme angepresst wird. Im ersten Schritt wird bei diesem Schweißverfahren bevorzugt ein rotierendes Werkzeug mit ausreichend hoher Kraft solange in den Fügespalt der beiden Bauteile gedrückt, bis eine Werkzeugschulter auf der Bauteiloberfläche zur Anlage kommt. Während des zweiten Schritts verweilt das sich drehende Werkzeug für einige Sekunden an der Eintauchstelle. Durch die Reibung zwischen Werkzeugschulter und Fügepartnern erwärmt sich der Werkstoff unter der Schulter bis kurz unter den Schmelzpunkt. Dieser Temperaturanstieg hat einen Festigkeitsabfall zur Folge, wodurch der Werkstoff plastifiziert wird und eine Vermischung der Fügezone möglich wird. Mit dem Einsetzen der Vorschubbewegung beginnt der dritte Schritt, bei dem das rotierende Werkzeug mit hoher Anpresskraft entlang der Fügelinie bewegt wird. Der durch die Vorschubbewegung entstehende Druckgradient zwischen Vorder- und Rückseite des Werkzeugs und dessen Rotationsbewegung bewirken den Transport von plastifiziertem Werkstoff um das Werkzeug herum, der sich dort vermischt und die Naht bildet. Am Ende der Naht wird das Werkzeug wieder aus der Fügezone herausgezogen. Die Vorteile des Rührreibschweißverfahrens liegen darin, dass keine Zusatzwerkstoffe erforderlich sind, hohe Nahtfestigkeiten erzielbar sind, kein Schutzgas nötig ist, der Prozessablauf relativ einfach ist, ein breites Spektrum von Mischverbindungen realisierbar ist und es bei relativ niedrigen Prozesstemperaturen durchführbar ist, wodurch sich ein geringer Verzug ergibt und die Gefügeeigenschaften der zu verschweißenden Bauteile wenig beeinflusst werden.

Gemäß der vorliegenden Erfindung wird beim Schweißvorgang ein Hilfswerkzeug so angeordnet, dass eines der Bauteile zwischen dem Hilfswerkzeug und dem Schweißwerkzeug eingeklemmt ist und beide Sockel an dem Hilfswerkzeug anliegen. Beim Rührreibschweißen wird anschließend Material von beiden Sockeln in eine Aussparung am Hilfswerkzeug, die an beide Sockel angrenzt, eingepresst. Das eingepresste Material verschließt die Trennfuge zwischen den beiden Bauteilen außerhalb der eigentlichen Schweißnaht. Dadurch wird eine Abdichtung der aneinander gefügten Bauteile erreicht. Ein Spalt neben der Schweißnaht in den sich eine Korrosion verursachende Feuchtigkeit einlagern kann, wird somit vorteilhaft geschlossen.

Gemäß einer bevorzugten Ausführungsform ist das Hilfswerkzeug wenigstens teilweise mit einer kratzfesten antihaftenden Beschichtung versehen. Besonders bevorzugt wird hierzu eine Teflonbeschichtung oder bevorzugt eine Keramikbeschichtung vorgesehen. Dies hat den Vorteil, dass das erwärmte Schweißgut nicht am Hilfswerkzeug anhaftet oder dieses beschädigt.

Das erfindungsgemäße Verfahren zum Herstellen von Überlappungsstoßschweißverbindungen und die erfindungsgemäße Überlappungsstoßschweißverbindung bieten den Vorteil eines spaltfreien Verbindungsstoßes der Schweißverbindung. Die Haltbarkeit der erfindungsgemäßen Schweißverbindung ist höher als bei Überlappungsstoßschweißnähten nach dem Stand der Technik. Es werden keine zusätzlichen Füllmaterialien zwischen den zu verbindenden Bauteilen benötigt. Die Korrosionsbeständigkeit der erfindungsgemäßen Schweißverbindung ist höher als bei denen des Standes der Technik, insbesondere da keine Spalte im Überlappungsstoß neben der Schweißnaht gebildet werden, die schlecht zu konservieren sind und einen Angriffspunkt für Korrosion bieten.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine schematische Schnittdarstellung einer Überlappungsstoßschweißverbindung gemäß einem ersten Ausführungsbeispiel in einem ersten Fertigungszustand, wobei Fig. 1 Merkmale der Erfindung zeigt, aber keine Ausführungsform der Erfindung, wie beansprucht;
- Fig. 2: eine schematische Schnittdarstellung einer Überlappungsstoßschweißverbindung gemäß dem Ausführungsbeispiel aus Fig. 1 in fertig gestelltem Zustand; und
- Fig. 3: eine schematische Schnittdarstellung einer erfindungsgemäßen Überlappungsstoßschweißverbindung gemäß einem Ausführungsbeispiel.

In den Figuren bezeichnen dieselben Bezugszeichen gleiche oder funktionsgleiche Komponenten, soweit nichts Gegenteiliges angegeben ist.

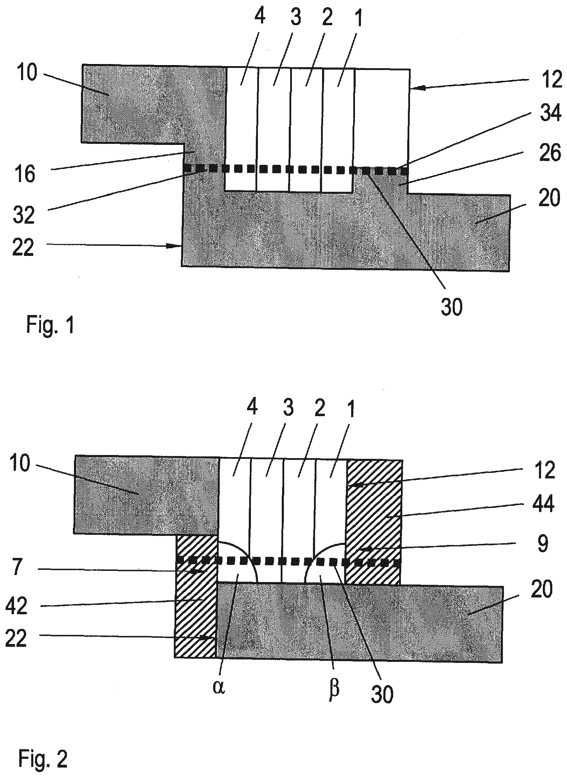

Fig. 1 zeigt eine schematische Schnittdarstellung einer Überlappungsstoßschweißverbindung gemäß einem ersten Ausführungsbeispiel in einem ersten Fertigungszustand. Die Schnittdarstellung ist so gewählt, dass Rührreibschweißnähte 1, 2, 3, 4 sich in die Papierebene hinein entlang von einem ersten Bauteil 10 und einem damit zu verbindenden zweiten Bauteil 20 erstrecken. Das erste Bauteil 10 weist eine sockelförmige Erhebung 16 auf, die hier unten am Bauteil 10 dargestellt ist. Das zweite Bauteil 20 weist ebenfalls eine sockelförmige Erhebung 26 auf, die hier an seiner Oberseite dargestellt ist. Die Bauteile 10, 20 überlappen sich mit den Sockeln 16, 26 in einem Überlappungsbereich 30, der hier als gepunktete Linie dargestellt ist. Vier Rührreibschweißnähte 1, 2, 3, 4 sind nebeneinander in dieser Darstellung von oben nach unten durch das erste Bauteil 10 in das zweite Bauteil 20 eingebracht. Die Rührreibschweißnähte 1, 2, 3 , 4 grenzen seitlich sich überlappend aneinander und verlaufen in dieser Darstellung im Wesentlichen senkrecht zur Papierebene. Im Überlappungsbereich 30 der beiden Bauteile 10, 20 ist zu beiden Seiten der Schweißnähte 1, 2, 3, 4 je ein schweißnahtfreier Bereich 32, 34 vorgesehen, in denen keine Verschweißung der beiden Bauteile 10, 20 miteinander erfolgt ist.

Fig. 2 zeigt eine schematische Schnittdarstellung einer Überlappungsstoßschweißverbindung gemäß dem Ausführungsbeispiel aus Fig. 1 in fertig gestelltem Zustand. Die Bauteile 10, 20 sind durch vier sich überlappende Schweißnähte 1, 2, 3, 4 miteinander verschweißt. Die nicht verschweißten Bereiche 32 und 34 aus Fig. 1 sind hierbei nicht mehr gegeben, da diese abgetrennt bzw. abgetragen wurden. Ein erster Schnittbereich 42 und ein zweiter Schnittbereich 44 sind hierzu schematisch als Rechtecke dargestellt. In diesen Schnittbereichen 42, 44 wurde Material von den beiden Bauteilen 10, 20 so abgetrennt, dass im Überlappungsbereich 30 der beiden Bauteile 10, 20 keine nicht verschweißten Bereiche 32, 34 mehr vorhanden sind, sondern die beiden Bauteile 10, 20 lediglich im Bereich der Schweißnähte 1, 2, 3, 4 übereinander liegen. Durch das Abtragen von Material von den beiden Bauteilen 10, 20 wurden eine erste Außenschnittfläche 7 und eine zweite Außenschnittfläche 9 gebildet, die jeweils in einem stumpfen Winkel α bzw. β zum Überlappungsbereich 30 angeordnet sind und die entlang einer Stirnseite 12 am ersten Bauteil 10 bzw. einer Stirnseite 22 am zweiten Bauteil 20 entlang dem jeweils gegenüber angeordneten Sockel 16 bzw. 26 des anderen Bauteils 10 bzw. 20 verlaufen.

Durch das Entfernen der nicht verschweißten Überlappungsbereiche ist die Schweißverbindung frei von Spalten. Feuchtigkeit kann sich somit nicht mehr im Überlappungsbereich der beiden Bauteile absetzen und hier zu Korrosion führen. Dadurch kann die Haltbarkeit der Schweißverbindung wesentlich erhöht werden.

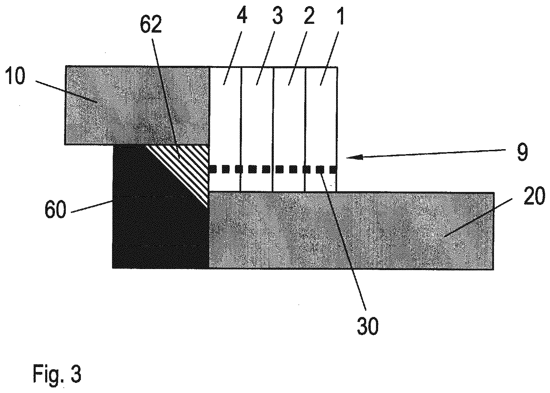

Fig. 3 zeigt eine schematische Schnittdarstellung einer erfindungsgemäßen Überlappungsstoßschweißverbindung gemäß einem Ausführungsbeispiel. Zwei sich überlappend angeordnete Bauteile 10, 20, die einen analogen Aufbau, zu den Bauteilen in Fig. 1 und Fig. 2 aufweisen, sind durch vier Rührreibschweißnähte 1, 2, 3, 4 miteinander verschweißt. Im rechten Bildbereich ist entsprechend dem Ausführungsbeispiel aus Fig. 2 durch eine spanende Nachbearbeitung der Überlappungsbereich 30 bis zur Schweißnaht 1 abgetragen worden, um eine spaltfreie Verbindung zu erzeugen. Im linken Bildbereich ist ein Hilfswerkzeug 60 dargestellt, das rechts oben eine Aussparung 62 aufweist. Das Hilfswerkzeug ist so angeordnet, dass das Bauteil 10 zwischen dem Hilfswerkzeug 60 und dem Schweißwerkzeug 50 eingeklemmt ist und beide Bauteile 10, 20 an dem Hilfswerkzeug 60 anliegen. Material von beiden Bauteilen 10, 20 ist in eine Aussparung 62 am Hilfswerkzeug 60, die an beide Bauteile 16, 26 angrenzt, eingepresst.

Dadurch wird auch gemäß diesem Ausführungsbeispiel eine spaltfreie Schweißverbindung 1 erzeugt. Beim Schweißen wird das Bauteilmaterial so in die Aussparung 62 eingepresst, dass es dicht am ersten und zweiten Bauteil 10, 20 angeformt wird und dadurch den Überlappungsbereich 30 zwischen den beiden Bauteilen 10, 20 abschließt.

### Bezugszeichenliste

- 1, 2, 3, 4: Schweißnähte
- 7: erste Außenschnittfläche
- 9: zweite Außenschnittfläche
- 10: erstes Bauteil
- 12: Stirnseite des ersten Bauteils
- 16: Sockel am ersten Bauteil
- 20: zweites Bauteil
- 22: Stirnseite des zweiten Bauteils
- 26: Sockel am zweiten Bauteil
- 30: Überlappungsbereich
- 32: erster nicht verschweißter Bereich
- 34: zweiter nicht verschweißter Bereich
- 42: erster Schnittbereich
- 44: zweiter Schnittbereich
- 50: Schweißwerkzeug
- 60: Hilfswerkzeug
- 62: Aussparung
- α: Winkel zwischen erster Außenschnittfläche und dem Überlappungsbereich
- β: Winkel zwischen zweiter Außenschnittfläche und dem Überlappungsbereich

## Patentansprüche

1. Verfahren zum Herstellen von Überlappungsstoßschweißverbindungen mit folgenden Verfahrensschritten:
(a) Bereitstellen von zwei zu verbindenden Bauteilen (10, 20), die jeweils mindestens einen Sockel (16, 26) aufweisen;
(b) Anordnen der Bauteile (10, 20) derart, dass die Sockel (16, 26) einander zugewandt sind und sich die Bauteile (10, 20) in einem Überlappungsbereich (30) überlappen, der sich wenigstens teilweise über beide Sockel (16, 26) erstreckt; **gekennzeichnet durch** folgende Verfahrensschritte:
(b2) Anordnen wenigstens eines Hilfswerkzeuges (60) derart, dass eines der Bauteile (10, 20) zwischen dem Hilfswerkzeug (60) und dem Schweißwerkzeug (50) eingeklemmt wird und beide Sockel (16, 26) an dem Hilfswerkzeug (60) anliegen und eine Aussparung (62) im Hilfswerkzeug (60) an beide Sockel (16, 26) angrenzt; und
(c2) Verbinden der Bauteile (10, 20) durch Verschweißen im Überlappungsbereich (30) unter Bildung mindestens einer Schweißnaht (1), wobei am Rande des Überlappungsbereichs Material von beiden Sockeln (16, 26) in eine Aussparung (62) am Hilfswerkzeug (60), die an beide Sockel (16, 26) angrenzt, eingepresst wird.

2. Verfahren nach Anspruch 1,
**dadurch gekennzeichnet,**
**dass** während des Schritts des Verbindens der Bauteile (10, 20) mindestens zwei im Wesentlichen parallel verlaufende Schweißnähte (1, 2) gebildet werden, die ohne Zwischenraum aneinander angrenzen oder sich überlappen.

3. Verfahren nach Anspruch 1 oder Anspruch 2,
**dadurch gekennzeichnet,**
**dass** der Sockel (16) am ersten Bauteil (10) am Rande des ersten Bauteils (10) angeordnet und die erste Außenschnittfläche (7) derart gebildet wird, dass sie sich von dem Sockel (16) über eine Stirnseite (22) des gegenüberliegenden Bauteils (20) erstreckt und/oder der Sockel (26) am zweiten Bauteil (20) am Rande des zweiten Bauteils (20) angeordnet und die zweite Außenschnittfläche (7) derart gebildet wird, dass sie sich von dem Sockel (26) über eine Stirnseite (12) des gegenüberliegen den Bauteils (10) erstreckt.

4. Verfahren nach einem der Ansprüche 1 bis 3,
**dadurch gekennzeichnet**,
während des Schritts des Verbindens der Bauteile (10, 20) als Schweißverfahren ein Rührreibschweißen angewendet wird, bei dem ein rotierendes Schweißwerkzeug (50) an wenigstens eines der Bauteile (10, 20) zum Erzeugen von Reibungswärme angepresst wird.

5. Überlappungsstoßschweißverbindung mit wenigstens zwei sich in einem Überlappungsbereich (30) überlappenden Bauteilen (10, 20), die jeweils wenigstens einen Sockel (16, 26) aufweisen, wobei die Sockel (16, 26) einander zugewandt ausgerichtet sind und sich wenigstens teilweise in den Überlappungsbereich (30) erstrecken und wenigstens eine Schweißnaht (1) im Überlappungsbereich (30) vorgesehen ist, die die beiden Bauteile (10, 20) miteinander verbindet, **dadurch gekennzeichnet, dass** am Rande des Überlappungsbereichs (30) Material von beiden Sockeln (16, 26) in eine Aussparung (62) an einem Hilfswerkzeug (60), die an beide Sockel (16, 26) angrenzt, eingepresst ist, dass es dicht am ersten und zweiten Bauteil (10, 20) angeformt ist und dadurch den Überlappungsbereich (30) zwischen den beiden Bauteilen (10, 20) abschließt.

6. Überlappungsstoßschweißverbindung nach Ausführungsbeispiel 5,
**dadurch gekennzeichnet,**
**dass** beide Bauteile (10, 20) durch eine Rührreibschweißnaht (1) miteinander verbunden sind.

7. Überlappungsstoßschweißverbindung nach einem der Ausführungsbeispiele 5 oder 6,
**dadurch gekennzeichnet,**
**dass** mindestens zwei im Wesentlichen parallel verlaufende Schweißnähte (1, 2) vorgesehen sind.

8. Überlappungsstoßschweißverbindung nach Ausführungsbeispiel 7,
**dadurch gekennzeichnet,**
**dass** die Schweißnähte (1, 2) aneinander angrenzen.

## Claims

1. Method for producing overlapping weld joints comprising the following method steps:
(a) providing two components (10, 20) to be joined, each having at least one base (16, 26) ;
(b) arranging the components (10, 20) in such a way that the bases (16, 26) face one another and the components (10, 20) overlap in an overlapping region (30) that extends at least partially over both bases (16, 26);
**characterized by** the following method steps:
(b2) arranging at least one auxiliary tool (60) such that one of the components (10, 20) is clamped between the auxiliary tool (60) and the welding tool (50) and both bases (16, 26) rest against the auxiliary tool (60) and a recess (62) in the auxiliary tool (60) adjoins both bases (16, 26); and
(c2) joining the components (10, 20) by welding in the overlapping region (30) while forming at least one weld seam (1), at the edge of the overlapping region material from both bases (16, 26) being pressed into a recess (62) on the auxiliary tool (60) that adjoins both bases (16, 26).

2. Method according to Claim 1,
**characterized**
**in that**, during the step of joining the components (10, 20), at least two substantially parallel weld seams (1, 2) that adjoin one another or overlap without a gap are formed.

3. Method according to Claim 1 or 2,
**characterized**
**in that** the base (16) on the first component (10) is arranged at the edge of the first component (10) and the first outer cut surface (7) is formed such that it extends from the base (16) over an end face (22) of the opposite component (20) and/or the base (26) on the second component (20) is arranged at the edge of the second component (20) and the second outer cut surface (7) is formed such that it extends from the base (26) over an end face (12) of the opposite component (10).

4. Method according to one of Claims 1 to 3,
characterized
during the step of joining the components (10, 20), friction-stir welding, in which a rotating welding tool (50) is pressed against at least one of the components (10, 20) to generate frictional heat, is used as the welding method.

5. Overlapping weld joint with at least two components (10, 20), which overlap in an overlapping region (30) and each have at least one base (16, 26), the bases (16, 26) being aligned facing one another and extending at least partly into the overlapping region (30) and at least one weld seam (1), which joins the two components (10, 20) to one another, being provided in the overlapping region (30), **characterized in that** at the edge of the overlapping region (30) material from both bases (16, 26) is pressed into a recess (62) on the auxiliary tool (60) that adjoins both bases (16, 26), **in that** it is moulded on the first and second components (10, 20) in a solidly bonded manner and as a result closes off the overlapping region (30) between the two components (10, 20).

6. Overlapping weld joint according to exemplary embodiment 5,
**characterized**
**in that** the two components (10, 20) are joined to one another by a friction stir welding seam (1).

7. Overlapping weld joint according to one of exemplary embodiments 5 and 6,
**characterized**
**in that** at least two substantially parallel weld seams (1, 2) are provided.

8. Overlapping weld joint according to exemplary embodiment 7,
**characterized**
**in that** the weld seams (1, 2) adjoin one another.

## Revendications

1. Procédé de réalisation de liaisons par soudage bout à bout à recouvrement, ledit procédé comprenant les étapes suivantes :
(a) prévoir deux composants (10, 20) à relier qui comportent chacun au moins un socle (16, 26) ;
(b) disposer les composants (10, 20) de telle manière que les socles (16, 26) soient tournés les uns vers les autres et que les composants (10, 20) se recouvrent dans une région de recouvrement (30) qui s'étend au moins partiellement sur les deux socles (16, 26) ;
**caractérisé par** les étapes suivantes :
(b2) disposer au moins un outil auxiliaire (60) de telle sorte que l'un des composants (10, 20) soit serré entre l'outil auxiliaire (60) et l'outil de soudage (50) et que les deux socles (16, 26) soient en appui sur l'outil auxiliaire (60) et qu'un évidement (62) soit ménagé de manière adjacente aux deux socles (16, 26) dans l'outil auxiliaire (60) ; et
(c2) relier les composants (10, 20) par soudage dans la zone de recouvrement (30) avec formation d'au moins un cordon de soudure (1), le matériau des deux socles (16, 26) étant enfoncé, au bord de la zone de recouvrement, dans un évidement (62), adjacent aux deux socles (16, 26), au niveau de l'outil auxiliaire (60).

2. Procédé selon la revendication 1,
**caractérisé en ce que**
au moins deux cordons de soudure (1, 2) sensiblement parallèles, qui sont adjacents ou se recouvrent sans espace intermédiaire, sont formés au cours de l'étape de liaison des composants (10, 20).

3. Procédé selon la revendication 1 ou la revendication 2,
**caractérisé en ce que**
le socle (16) est disposé sur le premier composant (10) au bord du premier composant (10) et la première interface extérieure (7) est formée de telle manière à s'étendre depuis le socle (16) sur un côté frontal (22) du composant opposé (20) et/ou le socle (26) est disposé sur le deuxième composant (20) au bord du deuxième composant (20) et la deuxième interface extérieure (7) est formée de manière à s'étendre depuis le socle (26) sur un côté frontal (12) du composant opposé (10).

4. Procédé selon l'une des revendications 1 à 3,
caractérisé
le procédé de soudage employé pendant l'étape de liaison des composants (10, 20) est un soudage par friction-malaxage dans lequel un outil de soudage rotatif (50) est pressé sur au moins l'un des composants (10, 20) pour générer de la chaleur de friction.

5. Liaison par soudage bout à bout à recouvrement à au moins deux composants (10, 20) qui se recouvrent dans une zone de recouvrement (30) et qui comportent chacun au moins un socle (16, 26), les socles (16, 26) étant orientés l'un vers l'autre et s'étendant au moins partiellement dans la zone de recouvrement (30) et au moins un cordon de soudure (1) étant prévu dans la zone de recouvrement (30) et reliant les deux composants (10, 20) l'un à l'autre, **caractérisé en ce que** le matériau de deux socles (16, 26) est enfoncé, au bord de la zone de recouvrement (30), dans un évidement (62) ménagé au niveau d'un outil auxiliaire (60) et adjacent aux deux socles (16, 26) de sorte que le matériau soit moulé tout près des premier et deuxième composants (10, 20) et ferme ainsi la zone de recouvrement (30) entre les deux composants (10, 20).

6. Liaison par soudage bout à bout à recouvrement selon l'exemple de réalisation 5, **caractérisée en ce que**
les deux composants (10, 20) sont reliés l'un à l'autre par un cordon de soudure à friction-malaxage (1).

7. Liaison par soudage bout à bout à recouvrement selon l'un des exemples de réalisation 5 ou 6,
**caractérisée en ce que**
au moins deux cordons de soudure (1, 2) sont prévus qui s'étendent de manière sensiblement parallèle.

8. Liaison par soudage bout à bout à recouvrement selon le mode de réalisation 7,
**caractérisée en ce que**
les cordons de soudure (1, 2) sont adjacents les uns aux autres.
